# EUROPÄISCHE PATENTSCHRIFT

(11) **EP 3 695 076 B1**
(45) Veröffentlichungstag und Bekanntmachung des Hinweises auf die Patenterteilung: **08.06.2022**
(21) Anmeldenummer: 18783405.6
(22) Anmeldetag: 01.10.2018
(51) Int. Cl.: E04H 15/58, A01G 9/22, E04F 10/06, E06B 9/64, E04B 7/14

(54) **UEBERDACHUNGSVORRICHTUNG FUER PFLANZEN**
ROOFING DEVICE FOR PLANTS
DISPOSITIF DE RECOUVREMENT POUR PLANTES

(30) Priorität: 11.10.2017 DE 102017123661; 13.08.2018 DE 102018119624
(43) Veröffentlichungstag der Anmeldung: 19.08.2020
(73) Patentinhaber: Lock Antriebstechnik GmbH, 88521 Ertingen (DE)
(72) Erfinder: NEUBRAND, Ulrich, 88521 Ertingen (DE); BAUSCH, Manfred, 88527 Unlingen (DE)
(74) Vertreter: Otten, Roth, Dobler & Partner mbB Patentanwälte
(86) Internationale Anmeldenummer: PCT/EP2018/076652
(87) Internationale Veröffentlichungsnummer: WO 2019/072611

(56) Entgegenhaltungen:
- EP-A2- 1 113 120
- WO-A1-2004/011760
- WO-A1-2004/098267
- BE-A3- 1 018 230
- FR-A1- 2 643 110
- US-A- 5 520 236

## Beschreibung

### Stand der Technik

Überdachungsvorrichtungen für Pflanzen sind in vielfältiger Weise bekannt. Insbesondere sind Pflanzenüberdachungen zum Schutz der Pflanzen gegen Beschädigung durch Regen, Hagel und Frost z.B. in Form von Gewächshäusern oder Hagelnetzen bekannt.

Nachteilig an diesen Überdachungsvorrichtungen ist, dass eine direkte Sonneneinstrahlung auf die überdachten Pflanzen gemindert ist.

### Aufgabe und Vorteile der Erfindung

Aufgabe der vorliegenden Erfindung ist es, eine alternative Überdachungsvorrichtung insbesondere für Pflanzen bereitzustellen. WO2004/098267A1 offenbart eine Überdachungsvorrichtung gemäß der Präambel von Anspruch 1. EP1113120A2, BE1018230A3, WO2004/011760A1, US5520236A und FR2643110A1 offenbaren weitere Überdachungsvorrichtungen gemäß dem Stand der Technik.

Diese Aufgabe wird durch die Merkmale des Anspruchs 1 gelöst.

In den abhängigen Ansprüchen sind vorteilhafte und zweckmäßige Ausführungsformen angegeben.

Die Erfindung geht von einer Überdachungsvorrichtung insbesondere für Pflanzen, Tiere, oder Gegenstände wie z.B. Fahrzeuge aus, insbesondere von einer Faltdachvorrichtung beispielsweise für Pflanzen aus.

Die Überdachungsvorrichtung ist vorteilhafterweise als eine Pflanzenüberdachungsvorrichtung, als eine Hagelschutzüberdachungsvorrichtung und/oder als eine Pflanzenumhausungs-Überdachungsvorrichtung ausgebildet. Vorteilhafterweise ist die Überdachungsvorrichtung dazu ausgebildet Pflanzenkulturen oder eine Nutzfläche, wie z.B. eine Weide oder ein Parkplatz zu überdachen. Die Überdachungsvorrichtung ist insbesondere als eine Wetterschutzvorrichtung ausgebildet, um beispielsweise unter der Überdachungsvorrichtung befindliche, Pflanzen, Tiere, Menschen und/oder Gegenstände vor z.B. Regen und/oder Hagel zu schützen. Die Überdachungsvorrichtung kann auch als Sonnendach ausgebildet sein.

Der wesentliche Aspekt der Erfindung ist darin zu sehen, dass die Überdachungsvorrichtung eine Längsführungseinrichtung, zumindest zwei Querträger und ein flexibles Bahnelement umfasst, wobei die Längsführungseinrichtung ein Längsführungselement, Bewegungsmittel, ein Antriebselement und eine Aufständerung aufweist, wobei das Längsführungselement sich zwischen Befestigungselementen der Aufständerung erstreckt, wobei ein erster Querträger mit den Bewegungsmittel gekoppelt ist, sodass der erste Querträger durch das Antriebselement bewegbar vorhanden ist, wobei der erste Querträger relativ zu einem zweiten Querträger bewegbar vorhanden ist, wobei der zweite Querträger an der Aufständerung und/oder am Längsführungselement fixiert ist, wobei der erste und der zweite Querträger insbesondere ausschließlich über das Bahnelement miteinander verbunden sind, wobei eine Längserstreckung der Querträger quer zu einer Erstreckungsrichtung des Längsführungselements vorhanden ist, wobei der erste Querträger insbesondere ausschließlich in einem mittleren Bereich einer Längserstreckung des Querträgers durch das Längsführungselement geführt gehalten ist. Hierdurch ist eine Bewegung des Bahnelements und damit eine Überdachung der Überdachungsvorrichtung realisierbar.

Bevorzugterweise wirkt das Antriebselement mit den bzw. auf die Bewegungsmittel.

Der Querträger ist in einer Längserstreckung vorteilhafterweise zwischen 2m und 10m lang. Der Querträger ist beispielsweise 2m, 3m, 3,5m, 4m, 6m, 6,4m, 6,5m, 7,5m oder 8m lang. Bevorzugterweise besitzt der Querträger eine Länge von 3,2m oder 7m. Der Querträger umfasst vorteilhafterweise eine Breite zwischen 3cm und 5cm, insbesondere eine Breite von 4cm. Der Querträger besitzt beispielsweise eine Höhe zwischen 0,5cm und 5cm. Insbesondere besitzt der Querträger eine Höhe von 1cm oder 1,5cm.

Vorteilhafterweise umfasst der Querträger in Längserstreckung gesehen einen insbesondere durchgehenden Montageschlitz. Der Montageschlitz dient beispielsweise zur Anordnung des Bahnelements. Beispielsweise ist das Bahnelement in den Montageschlitz auffädelbar oder einklippsbar ausgebildet.

Auch ist es von Vorteil, dass das Längsführungselement als ein Trageelement ausgebildet ist. Das Längsführungselement ist z.B. als ein Seil, als ein Draht, als ein Trageseil und/oder als ein Tragedraht ausgebildet.

Weiter wird vorgeschlagen, dass zwei Längsführungselemente parallel verlaufend und beabstandet zueinander vorhanden sind. Hierdurch ist eine Führung eines beweglichen Querträgers, insbesondere des ersten Querträgers verbessert. Vorteilhafterweise sind durch die Verwendung von zwei oder mehr Längsführungselementen Querkräfte bzw. ein Verklemmen oder ein Verkanten des beweglichen Querträgers, insbesondere bei einer Bewegung des beweglichen Querträgers vermindert.

Das Längsführungselement ist insbesondere an den Befestigungselementen der Aufständerung gelagert, z.B. fixiert. Beispielsweise ist das Längsführungselement unbeweglich an der Aufständerung befestigt. Vorteilhafterweise ist das Längsführungselement zwischen den Befestigungselementen aufgespannt. Zum Beispiel steht das Längsführungselement im angeordneten Zustand an der Überdachungsvorrichtung unter einer Vorspannung. Vorstellbar ist auch, dass das Längsführungselement als eine Schienenführung ausgebildet ist.

Überdies ist es von Vorteil, dass das Antriebselement als ein Getriebemotor und/oder als ein Wickelmotor ausgebildet ist. Denkbar ist auch, dass das Antriebselement als ein Handantrieb, z.B. als ein Kurbelantrieb ausgebildet ist. Vorteilhafterweise bewegt das Antriebselement eine Wickelwelle der Bewegungsmittel. Das Antriebselement umfasst vorteilhafterweise einen Elektromotor, z.B. mit einem Getriebe.

Weiter wird vorgeschlagen, dass die Bewegungsmittel ein Seilzugsystem mit einem Zugseil oder einem Zugdraht aufweisen. Hierdurch ist ein vergleichsweise kostengünstiges Bewegungssystem realisiert. Vorteilhafterweise umfassen die Bewegungsmittel eine Wickeleinrichtung. Die Wickeleinrichtung umfasst insbesondere eine Wickeltrommel, einen Wickeldraht oder ein Wickelseil und z.B. eine Umlenkrolle. Vorteilhafterweise sind die Bewegungsmittel als ein Endlos-Seilzugsystem ausgebildet. Denkbar ist bspw. dass eine Antriebswelle des Antriebselements mit der Wickeltrommel gekoppelt ist. Weiter ist es vorstellbar, dass das Wickelseil ringförmig, z.B. als eine Endlosschleife oder Endlosschlaufe vorhanden ist, und bewegliche über eine Umlenkrolle oder über zwei voneinander beabstandete Umlenkrollen verläuft. Vorteilhafterweise ist jeweils eine Umlenkrolle an einem Befestigungselement, z.B. an einem Pfahl der Aufständerung, angeordnet. Weiter ist es vorstellbar, dass das Wickelseil zwischen den Umlenkrollen über die Wickeltrommel verläuft und Wicklungen an der Wickeltrommel bildet, sodass eine Drehung der Wickeltrommel eine Bewegung des Wickelseils in einer Richtung einer Längserstreckung der Längsführungselemente verursacht.

In einer vorteilhaften Ausgestaltung der Überdachungsvorrichtung ist das Bahnelement als eine Folie ausgebildet. Vorteilhafterweise ist das Bahnelement flexibel und/oder elastisch vorhanden. Hierdurch ist eine Faltdachvorrichtung realisiert. Bevorzugterweise ist das Bahnelement vergleichsweise reißfest vorhanden. Die Folie ist vorteilhafterweise als eine bekannte, insbesondere herkömmliche Folie, insbesondere aus dem Überdachungsbereich für Pflanzen, ausgebildet.

Auch ist es von Vorteil, dass der Querträger als ein Profil ausgebildet ist. Der Querträger ist insbesondere als ein Aluminiumprofil ausgebildet. Vorstellbar ist auch, dass der Querträger als ein Kunststoffprofil ausgebildet ist. Der Querträger ist z.B. aus Metall, z.B. Stahl und/oder Aluminium, Kunststoff und/oder einer Kombination der Materialien ausgebildet. Der Querträger ist beispielsweise als ein T-Profil, C-Profil, U-Profil und/oder als ein Hohlprofil vorhanden. Bevorzugterweise ist der Querträger als Flachprofil ausgebildet. Denkbar ist auch, dass der Querträger ein Vollprofil ist. Ein Querschnitt des Querträgers ist beispielsweise rechteckig, insbesondere quadratisch vorhanden. Denkbar ist auch, dass der Querträger in einem Querschnitt rund oder oval ausgebildet ist. Vorteilhafterweise sind die Querträger der Überdachungsvorrichtung identisch. Bevorzugterweise ist ein Querträger einstückig vorhanden. Vorstellbar ist auch, dass der Querträger zwei- oder mehr Profilelemente aufweist, wobei die mehreren Profilelemente des Querträgers vorteilhafterweise z.B. durch Koppelmittel miteinander insbesondere gelenkig und/oder bewegbar, verbunden sind. Vorteilhaferweise ist der Querträger quer zu seiner Längsachse elastisch oder biegbar vorhanden.

Bevorzugterweise weist ein Querträger ein Führungsorgan auf, mittels welchem der Querträger insbesondere beweglich mit dem Längsführungselement gekoppelt ist. Das Führungsorgan ist beispielsweise als eine Bohrung und/oder als eine Öse ausgebildet. Das Führungsorgan des Querträgers ist in Längserstreckung des Querträgers gesehen vorteilhafterweise in einem mittleren Bereich des Querträgers, insbesondere in einem mittleren Drittel des Querträgers vorhanden. Denkbar ist aber auch, dass der Querträger an einem Endbereich ein Führungsorgan umfasst. Vorteilhafterweise ist der Querträger gebogen vorhanden. Beispielsweise ist das Führungsorgan derart am Querträger ausgebildet, dass in einem angeordneten Zustand des Querträgers an der Überdachungsvorrichtung der Querträger in Längserstreckung eine Biegung bzw. ein Bogen aufweist. Vorteilhafterweise sind Enden bzw. Endbereiche des Querträgers im angeordneten Zustand des Querträgers an der Überdachungsvorrichtung tiefer liegend vorhanden als das Führungsorgan. Beispielsweise ist ein Querträger an dem Längsführungselement aufgehängt. Denkbar ist auch, dass der Querträger auf dem Längsführungselement aufliegend gelagert ist.

In einer vorteilhaften Modifikation der Überdachungsvorrichtung ist das Bahnelement entlang einer Längsachse des Querträgers mit dem Querträger verbunden. Hierdurch ist eine Dachfläche realisiert. Beispielsweise ist das Bahnelement entlang insbesondere der ganzen Länge des Querträgers mit dem Querträger verbunden, z.B. unlösbar. Beispielsweise ist das Bahnelement an den Querträger geklemmt oder genietet. Denkbar ist auch, dass das Bahnelement an den Querträger lösbar angeordnet ist, z.B. mittels einer Druckknopfverbindung und/oder Klettverbindung. Vorteilhafterweise erstreckt sich ein Bahnelement quer zu einer Längserstreckung des Querträgers zwischen zwei Querträgern. Insbesondere erstreckt sich das Bahnelement z.B. ausschließlich zwischen einem unbeweglichen oder fixierten bzw. befestigten Querträger. Z.B. dem zweiten Querträger, und einem beweglichen Querträger, z.B. dem ersten Querträger.

Vorstellbar ist auch, dass das Bahnelement durch das Längsführungselement beweglich geführt vorhanden ist. Beispielsweise umfasst das Bahnelement hierzu ein Lagerungsorgan, z.B. in Form einer Öse.

Von Vorteil erweist sich außerdem, dass das Befestigungselement der Aufständerung als ein Pfosten oder als ein Pfahl ausgebildet ist, wobei die Aufständerung Kopplungsmittel aufweist, um einen Querträger, das Längsführungselement, die Bewegungsmittel und/oder das Antriebselement anzuordnen. Vorteilhafterweise ist der Pfosten oder der Pfahl der Aufständerung als herkömmlicher Pfosten oder Pfahl vorhanden, welcher in bekannter Weise zu Überdachung von insbesondere Bäumen verwendet wird.

Im angeordneten Zustand der Überdachungsvorrichtung befinden sich Befestigungselemente der Aufständerung vorteilhafterweise entlang einer Pflanzenreihe, insbesondere entlang einer Baumreihe in der Pflanzenreihe bzw. Baumreihe. Ein Befestigungselement ist z.B. als ein Pfahl oder ein Pfosten vorhanden. Die Aufständerung umfasst beispielsweise eine Pfahl- oder Pfostenreihe.

Vorteilhafterweise ist die Aufständerung derart ausgebildet, dass die Aufständerung, insbesondere das Befestigungselement, im angeordneten Zustand an der Überdachungsvorrichtung einen höchsten Punkt einer zu überdachenden Pflanze überragt. Insbesondere sind die Kopplungsmittel an einem die Pflanzen überragenden Ende der Aufständerung an der Aufständerung, einem Firstbereich der Überdachungsvorrichtung, vorhanden.

Die Querträger erstrecken sich im angeordneten Zustand an der Überdachungsvorrichtung in ihrer Längserstreckung vorteilhafterweise quer zu einer Abstandsrichtung der Befestigungselemente der Aufständerung bzw. einer Längserstreckung des Längsführungselements. Die Querträger sind vorteilhafterweise parallel zueinander ausgerichtet.

Das Antriebselement ist vorteilhafterweise durch ein Kopplungselement der Kopplungsmittel an einem Befestigungselement der Aufständerung befestigbar. Außerdem ist es vorteilhaft, dass die Kopplungsmittel ein Kopplungsorgan zur Befestigung einer Umlenkrolle und/oder einer Wickelrolle bzw. einer Wickeltrommel aufweisen.

Erfindungsgemäß sind drei Querträger vorhanden, wobei der erste und ein dritter Querträger relativ zum zweiten Querträger bewegbar sind. Hierdurch ist ein Aufbau der Überdachungsvorrichtung vereinfacht.

Vorteilhafterweise sind zwei Querträger quer zu ihrer Längserstreckung in einem maximalen Abstand zwischen 1m und 4m, z.B. zwischen 1,3m und 3m, insbesondere zwischen 1,5m und 2,5m voneinander beabstandet. Beispielsweise sind zwei Querträger quer zu ihrer Längserstreckung maximal 1m, 1,2m, 1,3m, 1,4m, 1,5m, 2,5m, 3m, 3,5m oder 4m voneinander beabstandet. Vorteilhafterweise sind zwei Querträger quer zu ihrer Längserstreckung etwa maximal 2m voneinander beabstandet.

Vorteilhafterweise sind zwei Querträger in einem geschlossenen Zustand einer Überdachung der Überdachungsvorrichtung aneinander anstehend vorhanden. Vorteilhafterweise sind diese zwei Querträger, welche in einem geschlossenen Zustand der Überdachung aneinander anstehen, nicht mit einem Bahnelement miteinander verbunden. Im geschlossenen Zustand der Überdachung überdeckt das Bahnelement oder die Bahnelemente der Überdachungsvorrichtung insbesondere vollständig über die mit der Überdachungsvorrichtung zu überdachenden Pflanzen.

Denkbar ist, dass der zweite Querträger quer zu einer Längserstreckung der Querträger gesehen zwischen dem ersten und dem dritten Querträger vorhanden ist. Vorstellbar ist weiter, dass sowohl der erste als auch der dritte Querträger insbesondere gleichzeitig bewegbar vorhanden sind. Vorteilhafterweise ist die Überdachungsvorrichtung derart ausgebildet, dass der erste und der dritte Querträger insbesondere gleichzeitig in Richtung des zweiten Querträgers bewegbar sind. Beispielsweise ist der erste Querträger gegenläufig zum dritten Querträger bewegbar.

Vorstellbar ist auch, dass, quer zu einer Längserstreckung der Querträger gesehen, der erste und der dritte Querträger insbesondere gleichzeitig in eine gleiche Richtung, insbesondere in Längserstreckung des Längsführungselements, bewegbar sind. Erfindungsgemäß ist der dritte Querträger quer zu seiner Längserstreckung gesehen zwischen dem ersten und dem zweiten Querträger angeordnet und nur der erste Querträger insbesondere direkt mit den Bewegungsmitteln gekoppelt ist. Vorstellbar ist auch, dass zwei oder mehr weitere Querträger in Längserstreckung der Querträger gesehen zwischen einem mit den Bewegungsmitteln gekoppeltem Querträger und einem an der Aufständerung fixierten Querträger vorhanden sind, wobei diese weiteren Querträger vorteilhafterweise in Längserstreckung des Längsführungselements bewegbar sind.

Außerdem wird vorgeschlagen, dass der Querträger dachsparrenartig vorhanden ist, wobei der Querträger sich über einen Dachfirst der Überdachungsvorrichtung insbesondere durchgängig verlaufend erstreckt. Hierdurch ist die Überdachungsvorrichtung vergleichsweise einfach und kostengünstig herstellbar. In einem montierten Zustand der Überdachungsvorrichtung ist der Querträger vorteilhafterweise in einem gebogenen und/oder gekickten und/oder gewinkelten Zustand vorhanden, wobei der Querträger in Längserstreckung insbesondere von einer Traufe der Überdachungsvorrichtung in Richtung Dachfirst hin zur gegenüberliegenden Traufe der Überdachungsvorrichtung verlaufend vorhanden ist.

Auch ist es von Vorteil, dass der insbesondere bewegbare Querträger, z.B. der erste und/oder der dritte Querträger im Firstbereich des Dachfirsts der Überdachungsvorrichtung durch das Längsführungselement geführt gehalten ist.

Auch wird ein Überdachungssystem, insbesondere ein Pflanzen- und/oder Obst-Überdachungssystem bestehend aus einem, zwei oder mehr Überdachungsvorrichtungen nach einer der voranstehend genannten Ausbildungen vorgeschlagen.

Eine erfindungsgemäße Überdachungsvorrichtung umfasst drei Querträger, wobei jeweils ein Querträger unbeweglich vorhanden ist und wobei jeweils zwei Querträger über ein Bahnelement miteinander verbunden sind. Eine derartige Anordnung wird auch als ein Überdachungs-Abschnitt der Überdachungsvorrichtung bezeichnet. Mehrere Abschnitte der Überdachungsvorrichtung, sind in Längserstreckung des Längsführungselements hintereinander anordenbar. Die Überdachungsvorrichtung erstreckt sich beispielsweise entlang einer Pflanzenreihe, z.B. einer Baumreihe. Vorteilhafterweise erstreckt sich die Überdachungsvorrichtung entlang einer vollständigen Länge der Pflanzenreihe. Vorstellbar ist weiter, dass Querträger der einzelnen Überdachungs-Abschnitte der Überdachungsvorrichtung von einem insbesondere durchgehenden Längsführungselement geführt gehalten sind. Vorteilhafterweise umfasst die Überdachungsvorrichtung ein Bewegungsmittel und ein Antriebselement. Beispielsweise sind alle beweglichen Querträger der einzelnen Überdachungs-Abschnitte der Überdachungsvorrichtung durch ein einziges Antriebselement bewegbar. Denkbar ist auch, dass jeder Überdachungs-Abschnitt ein separates Antriebselement und/oder ein separates Bewegungsmittel aufweist.

Von Vorteil erweist sich ein Obstüberdachungssystem, bei welchem Querträger unterschiedlicher Überdachungsvorrichtungen, welche benachbart zueinander vorhanden sind, miteinander verbunden sind. Beispielsweise sind zwei Überdachungsvorrichtungen quer zu einer Längserstreckung des Längsführungselements der Überdachungsvorrichtungen und/oder quer zu einer Pflanzenreihenerstreckung gesehenen nebeneinander vorhanden, wobei jeweils ein Querträger einer ersten Überdachungsvorrichtung mit einem Querträger einer zweiten Überdachungsvorrichtung verbunden ist. Beispielsweise erstreckt sich die erste Überdachungsvorrichtung über eine erste Pflanzenreihe und die zweite Überdachungsvorrichtung über eine zweite Pflanzenreihe, wobei die beiden Pflanzenreihen benachbart oder nebeneinander vorhanden sind.

Vorteilhafterweise sind die beiden Querträger der unterschiedlichen Überdachungsvorrichtungen an Enden der Querträger miteinander beweglich oder starr verbunden. Vorteilhafterweise sind die erste und die zweite Überdachungsvorrichtung derart miteinander verbindbar, dass zwischen Bahnelementen der Überdachungsvorrichtungen eine Öffnung, z.B. ein Spalt oder ein Schlitz vorhanden ist. Hierdurch ist eine Entwässerung bzw. eine Entlastung der Überdachungsvorrichtungen bei insbesondere starkem Regen oder Hagel realisiert. Die Enden der Querträger der beiden Überdachungssysteme, welche miteinander gekoppelt sind, bilden vorteilhafterweise einen Traufenbereich der Überdachung des Überdachungssystems und damit einen Tiefpunkt der Überdachung. Hierdurch befindet sich auch die Öffnung zwischen den Bahnelementen vorteilhafterweise im Traufenbereich der Überdachung.

Weiter ist es von Vorteil, dass an einem Obstüberdachungssystem eine ersten und eine zweite Überdachungsvorrichtung derart miteinander gekoppelt vorhanden sind und nur die erste Überdachungsvorrichtung ein Antriebselement und/oder Bewegungsmittel aufweist, dass ein Querträger der zweiten Überdachungsvorrichtung durch das Antriebselement der ersten Überdachungsvorrichtung bewegbar ist. Hierdurch ist ein Oberüberdachungssystem vergleichsweise kostengünstig herstellbar.

Denkbar ist, dass die beweglichen Querträger der ersten Überdachungsvorrichtung durch das Antriebselement über den Wickeldraht der Bewegungsmittel angetrieben ist und der angetriebene bewegliche Querträger mit einem beweglichen Querträger der zweiten Überdachungsvorrichtung derart gekoppelt ist, dass dieser bei einer Bewegung des angetriebenen Querträgers mitbewegt wird. Vorstellbar ist auch, dass z.B. ein Antriebselement eine Wickelwelle antreibt und die Wickelwelle sich quer zu einer Längserstreckung der Längsführungselemente der Überdachungsvorrichtungen von der ersten Überdachungsvorrichtung zur zweiten Überdachungsvorrichtung erstreckt und eine Bewegung der Wickelwelle eine Bewegung des Wickeldrahts der ersten Überdachungsvorrichtung und eine Bewegung des Wickeldrahts der zweiten Überdachungsvorrichtung verursacht.

Als vorteilhaft erweist sich auch, dass der Querträger sich im angeordneten Zustand über zwei oder mehr Pflanzenreihen erstreckt, wobei die Pflanzenreihen sich quer zur Längserstreckung des Querträgers erstrecken. In diesem Fall ist der Querträger z.B. an zwei oder mehr Längsführungselementen geführt gehalten, wobei ein erstes Längsführungselement beispielsweise entlang einer ersten Pflanzenreihe und ein zweites Führungselement entlang einer weiteren Pflanzenreihe sich erstreckend vorhanden ist. Der Querträger ist in diesem Fall in einem mittleren Bereich einer ersten Hälfte und in einem mittleren Bereich einer zweiten Hälfte des Querträgers an den Längsführungselementen geführt gehalten, wobei der Längsträger insbesondere durchgehend einstückig bestehend aus der ersten und der zweiten Hälfte ausgebildet sein kann.

Von Vorteil erweist sich außerdem, dass eine Überdachungsvorrichtung ein bewegliches Abdeckelement aufweist, sodass eine seitliche Öffnung der Überdachungsvorrichtung durch das Abdeckelement insbesondere zumindest teilweise abdeckbar vorhanden ist. Beispielsweise ist eine Seite eines Volumens, welches mittels der Überdachungsvorrichtung überdacht ist, durch das Abdeckelement insbesondere zumindest teilweise abdeckbar vorhanden. Bevorzugterweise umfasst die Überdachungsvorrichtung, insbesondere das Überdachungssystem zwei Abdeckelemente, welche beabstandet und sich gegenüberliegend an der Überdachungsvorrichtung und/oder am Überdachungssystem vorhanden sind. Vorteilhafterweise umfasst das Überdachungssystem an jeder seitlichen Öffnung ein Abdeckelement. Das Abdeckelement ist als ein flächiges, flexibles Element, z.B. als eine Folie oder ein Netz ausgebildet. Das Abdeckelement ist insbesondere vollflächig geschlossen ausgebildet. Hierdurch bildet das Abdeckelement, insbesondere in einem, die Seite oder seitliche Öffnung der Überdachungsvorrichtung abdeckenden Position, einen Driftschutz gegenüber Spritzmittel, beispielsweise im Fall, dass die Pflanzen unter der Überdachungsvorrichtung mittels einem Spritzmittel gegen Krankheiten und/oder Schädlinge behandelt, insbesondere bestäubt werden. Dadurch ist beispielsweise ein Spritzmitteleinsatz vergleichsweise minimiert und/oder ein Behandlungsvolumen bzw. eine Behandlungsfläche des Spritzmittels aufgrund der Überdachungsvorrichtung und insbesondere des Abdeckelements auf einen Bereich, insbesondere ein Volumen unterhalb der Überdachungsvorrichtung begrenzt.

Auch ist es von Vorteil, dass ein Antriebssystem vorhanden ist, um das Abdeckelement zu bewegen.

Von Vorteil erweist sich ebenfalls, dass das Antriebssystem als eine Wickelvorrichtung ausgebildet ist, wobei die Wickelvorrichtung ein mit einer Antriebseinheit drehbares und am Abdeckelement angreifendes längliches Wickelelement umfasst, mit dem abhängig von der Drehrichtung des Wickelelements das Abdeckelement auf das Wickelelement aufwickelbar und von diesem wieder abwickelbar ist, wobei Übertragungsmittel für ein Zusammenwirken der Antriebseinheit und des Wickelelements vorgesehen sind, mit einem wickelbaren Zugelement, das an einem drehbaren Wickelkörper aufgenommen ist, wobei der Wickelkörper mit der Antriebseinheit drehverbunden ist, wobei das Zugelement mit dem Wickelkörper auf- und abwickelbar ist.

Vorteilhafterweise ist das wickelbare Zugelement, zwischen einem ersten drehbaren Wickelkörper und einer Anbringstelle und/oder einem zweiten insbesondere drehbaren Wickelkörper derart aufgenommen, dass das Zugelement mit dem ersten von der Antriebseinheit antreibbaren Wickelkörper auf- und abwickelbar ist.

Das Wickelelement ist beispielsweise rohrartig und/oder stangenartig ausgebildet. Das Wickelelement ist z.B. als eine Stange und/oder als ein Rohr vorhanden. Denkbar ist auch, dass das Wickelelement in eine Längserstreckung des Wickelelements gesehen einen eckigen, z.B. einen rechteckigen und/oder z.B. einen quadratischen oder z.B. einen dreieckigen Querschnitt aufweist. Im angeordneten Zustand am Überdachungssystem erstreckt sich das Wickelement in seiner Längserstreckung vorteilhafterweise quer zur Längserstreckung der Querträger und/oder in Längserstreckung des Längsführungselements.

Ein bewegbarer Rand, insbesondere ein unterer Rand, des Abdeckelements wird beispielsweise nicht auf- oder abgewickelt, sondern allein translatorisch abgesenkt oder translatorisch angehoben. Beim Aufwickeln des Abdeckelements schlingt sich dieses spiralförmig eng anliegend um die Außenseite des Wickelelements ggf. um zuvor bereits aufgewickelte Schichten des Abdeckelements und bildet so einen meist zylindrischen Wickel auf dem Wickelelement. Bei umgekehrter Drehrichtung des Wickelelements wird dieser Wickel beim Abwickeln kontrolliert wieder entsprechend abgewickelt und die zuvor aufgewickelten Bereiche des Abdeckelements werden wieder freigegeben, so dass diese Bereiche flächig für Abdeckzwecke zur Verfügung stehen.

Beispielsweise ist es vorteilhaft, dass die Absenk- und die Anhebebewegung des Randes des Abdeckelements simultan zum Wickelvorgang des Abdeckelements erfolgt. Mit den Übertragungsmitteln kann eine Wirkverbindung zwischen der Antriebseinheit und dem anzutreibenden Wickelelement über entsprechende Abstände platzsparend und mit geringem Aufwand eingerichtet werden. Insbesondere wird eine sehr zuverlässige und stabile und trotzdem leichte und bei Belastungsspitzen ggf. geringfügig nachgebende Anordnung bereitgestellt.

Insbesondere ist ein materialsparender Aufbau für das Zusammenspiel zwischen der Antriebseinheit und dem Wickelelement möglich. Auch gegebenenfalls räumliche Gegebenheiten, die eine geradlinige bzw. einfache rechtwinklige Verbindung zwischen der Antriebseinheit und dem Wickelelement ausschließen, lassen sich mit einem im räumlichen Verlauf ohne Weiteres vielfältig anpassbaren Zugelement erfindungsgemäß problemlos bedienen. Vorteilhafterweise ist ein Zugelement vorhanden, um die Antriebseinheit zu bewegen. Denkbar ist auch, dass das Zugelement und der Wickelkörper derart angeordnet sind, dass durch das Zugelement der Wickelkörper translatorisch bewegbar ist. Beispielsweise ist die Antriebseinheit selbsttätig insbesondere translatorisch bewegbar, indem die Antriebseinheit, insbesondere ein Wickelkörper am Zugelement angreift, dieses z.B. auf- oder abwickelt. Das Zugelement ist beispielsweise als ein Seil oder eine Kette, insbesondere als ein Stahlseil vorhanden.

Des Weiteren ist trotz der hohen Belastbarkeit auf Zug von insbesondere länglichen dünnen Zugelementen wie zum Beispiel Stahlseilen eine gewisse Flexibilität bzw. Nachgiebigkeit des Abdeckelements in Richtung entgegen der wirkenden Zugbelastung mit dem Zugelement möglich. Dies kann beispielsweise bei stoßartigen Einwirkungen auf das Abdeckelement bzw. daran anschließende Einrichtungen von Vorteil sein, um Beschädigungen zu verhindern, die ansonsten bei statischen bzw. nahezu starren Systemen auftreten können, zum Beispiel bei wetterabhängig Einflüssen wie Wind, z.B. Sturmböen oder Schnee- und Regenlasten. Diesbezüglich sind Anordnungen mit starren Verbindungen mit Übertragungswellen und dazu passenden Getrieben weniger tolerant und zudem vergleichsweise aufwändig.

Ein Abwickelvorgang des Zugelements vom ersten Wickelkörper erfolgt z.B. zeitgleich mit einem Aufwickelvorgang des Zugelements am zweiten Wickelkörper und umgekehrt. Mit dem angetriebenen Aufwickeln des Zugelements bzw. dem dabei stattfindenden Wickelvorgang erfolgt eine Drehbewegungskopplung bzw. -übertragung von dem ersten Wickelkörper auf den zweiten Wickelkörper. Der zweite Wickelkörper ist außerdem mit dem Wickelelement derart gekoppelt, dass eine Drehbewegung des Wickelelements, was beim Hochziehen des Abdeckelements bzw. des Randes zwangsweise erfolgt, eine Drehbewegung des zweiten Wickelkörpers bedingt, so dass entsprechend einer gleichzeitig von dem ersten Wickelkörper abgewickelte Zugelementlänge z.B. auf den zweiten Wickelkörper aufgewickelt wird und das Zugelement gespannt bleibt. Bevorzugt befindet sich der zweite Wickelkörper in einem Bereich seitlich neben dem Abdeckelement bzw. in zur Drehachse des Wickelelements axialer Richtung seitlich benachbart zum Wickelelement.

Weiter ist es vorteilhaft, dass der erste Wickelkörper von der Antriebseinheit drehbar antreibbar ist. Der erste Wickelkörper ist beispielsweise an einem von der Antriebseinheit drehantreibbaren Wellenabschnitt aufgenommen. Der Wellenabschnitt ist insbesondere zumindest nahezu horizontal ausgerichtet, bevorzugt im Bereich der Antriebseinheit selbst positioniert. Damit kann eine kompakte Anordnung realisiert werden.

Ein Wickelkörper, insbesondere alle Wickelkörper drehen insbesondere um eine Drehachse, welche jeweils bevorzugt parallel zur Drehachse des Wickelelements ausgerichtet ist. Der Wickelkörper ist bevorzugt mit einem zylindrischen Wickelabschnitt oder ggf. einem leicht kegeligen bzw. konischen Wickelabschnitt versehen, auf welchem das Zugelement aufwickelbar ist.

Vorteilhafterweise ist das Antriebssystem an der Aufständerung anordenbar ausgebildet. Außerdem ist eine Anbringung der Antriebseinheit in einem Bereich der Überdachungsvorrichtung in der Regel dahingehend vorteilhaft, dass ein relevanter Abstand zu einem unteren, bodennahen Bereich der offenen Seite der Überdachungsvorrichtung existiert. Im bodennahen Bereich herrschen häufig für die Anordnung der Antriebseinheit ungünstige Bedingungen, da z.B. im landwirtschaftlichen Bereich dort meist ein erhöhter Verschmutzungsgrad bzw. ein regelmäßiger Kontakt mit Regenwasser, Schnee oder eine Störung durch Pflanzen, z.B. Gras zu beobachten ist.

Bei einer sogenannten Mittenwicklung ist das Wickelelement am Abdeckelement mittig angeordnet, sodass zwei beidseitig des Wickelelements angeordnete Teilbereiche des Abdeckelements gleichzeitig auf das bzw. von dem Wickelelement auf- bzw. abwickelbar sind. Mit der Mittenwicklung kann ausgehend von der gleichen Anzahl von Umdrehungen und bei gleichem Wickelumfang des Wickelelements eine zur Einfachwicklung doppelte Fläche des Abdeckelements aufgewickelt bzw. wieder abgewickelt werden. Das Wickeln bei der Mittenwicklung erfolgt also effektiver bzw. schneller gegenüber der entsprechenden Einfachwicklung. Denkbar ist weiterhin, dass bei der Mittenwicklung die Antriebseinheit und der Wickelkörper mittig am Abdeckelement angeordnet sind, beispielsweise in einer Verlängerung einer Längserstreckung des Wickelelements gesehen.

Vorteilhafterweise umfasst das Antriebssystem eine Führungseinheit, insbesondere im Fall einer Mittenwicklung, mittels welcher die Antriebseinheit beweglich geführt vorhanden ist. Die Führungseinheit umfasst beispielsweise ein Schienensystem, insbesondere eine Schiene, mittels welchem die Antriebseinheit linear beweglich geführt vorhanden ist. Beispielweise umfasst das Schienensystem, insbesondere die Schiene eine Nut, in welche ein Führungselement der Antriebseinheit eingreift, sodass die Antriebseinheit linearbeweglich geführt vorhanden ist.

### Beschreibung von Ausführungsbeispielen

Mehrere Ausführungsbeispiele werden anhand der nachstehenden Zeichnungen unter Angabe weiterer Einzelheiten und Vorteile näher erläutert.

Es zeigen:
- Figur 1:: eine Draufsicht auf Bewegungsmittel und ein Antriebselement einer erfindungsgemäßen Überdachungsvorrichtung,
- Figur 2:: eine Draufsicht auf die Bewegungsmittel und das Antriebselement aus Figur 1 mit zusätzlich angeordneten Querträgern und Bahnelementen,
- Figur 3:: eine perspektivische Draufsicht auf ein Überdachungssystem bestehend aus mehreren Überdachungsvorrichtungen,
- Figur 4:: eine seitliche Ansicht auf ein Überdachungssystem bestehend aus mehreren Überdachungsvorrichtungen,
- Figur 5:: eine seitliche Detailansicht auf eine Überdachungsvorrichtung,
- Figur 6:: eine perspektivische Ansicht auf eine Aufständerung mit daran angeordneten Bewegungsmitteln, bestehend aus einer Wickelwelle und einem Wickelseil,
- Figur 7:: eine perspektivische Ansicht auf eine Aufständerung mit daran angeordneten Bewegungsmitteln bestehend aus einer Umlenkrolle,
- Figur 8:: eine perspektivische Ansicht von oben auf ein Überdachungssystem in einem geöffneten Zustand,
- Figur 9:: eine perspektivische Ansicht von oben auf das Überdachungssystem gemäß Figur 8 in einem geschlossenen Zustand,
- Figur 10: eine Ansicht von schräg seitlich vorne auf das Überdachungssystem, mit einem Abdeckelement in einem teilweise geschlossenen Zustand und
- Figur 11: eine Ansicht von schräg seitlich hinten auf das Überdachungssystem, mit einem weiteren Abdeckelement in einem teilweise geschlossenen Zustand.

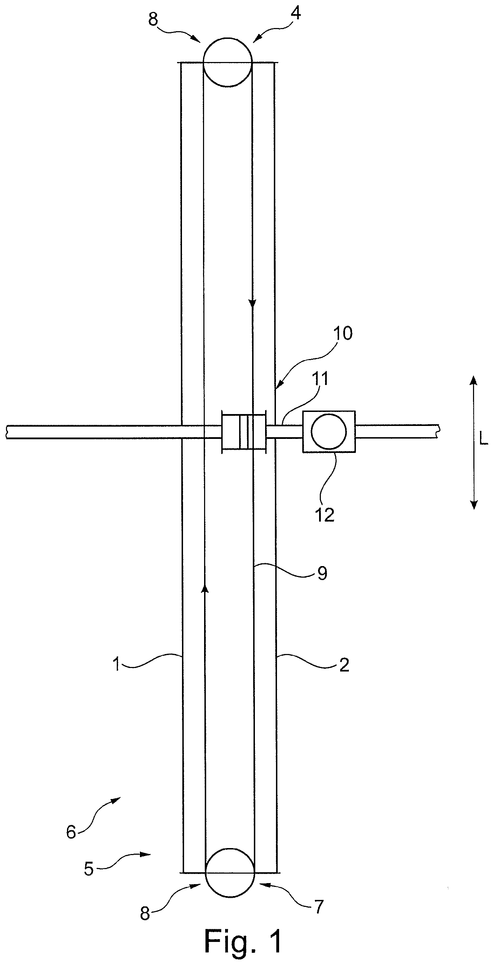

Figur 1 zeigt eine Draufsicht auf zwei Längsführungselemente 1, 2, welche zwischen zwei beabstandet zueinander vorhandenen Befestigungselementen in Form von Pfosten 3, 4 einer Aufständerung 5 einer Überdachungsvorrichtung 6 parallel verlaufend und beabstandet zueinander vorhanden sind. An den Pfosten 3, 4 ist z.B. jeweils ein Bewegungsmittel in Form einer Umlenkrolle 7, 8 angeordnet, zwischen welchen ein Seilzug 9 beweglich verlaufend geführt ist. Der Seilzug 9 ist beispielsweise über eine Wickelrolle 10 gewickelt vorhanden, sodass bei einer Drehung der Wickelrolle 10 der Seilzug 9 in Richtung einer Längserstreckung L der Längsführungselemente 1, 2 bewegt wird (siehe Pfeile in Figur 1). Die Wickelrolle 10 ist z.B. mit einer Antriebwelle 11 eines Antriebselements in Form eines Motors 12 gekoppelt.

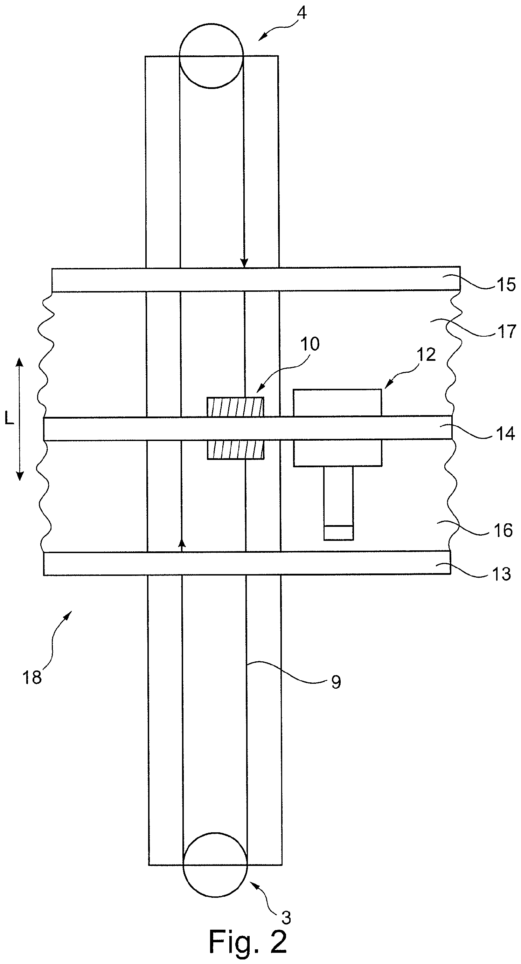

In Figur 2 ist die Anordnung aus Figur 1 dargestellt, wobei zusätzlich ein erster Querträger 13, ein zweiter Querträger 14, ein dritter Querträger 15, ein erstes Bahnelement 16 und ein zweite Bahnelement 17 dargestellt sind. Der zweite Querträger 14 ist vorteilhafterweise unbeweglich an der Überdachungsvorrichtung 6 angeordnet, z.B. fixiert. Der erste und der dritte Querträger 13, 15 sind vorteilhafterweise durch die Längsführungselement 1, 2 geführt gehalten und in Längserstreckung L beweglich vorhanden. Die Bahnelemente 16, 17 sind in Figur 2 durchsichtig dargestellt. Denkbar ist, dass die Bahnelemente 16, 17 transparent vorhanden sind. Vorstellbar ist aber auch, dass die Bahnelemente 16, 17 blickdicht ausgebildet sind. Der erste Querträger 13 ist über das erste Bahnelement 16 mit dem zweiten Querträger 14 und der zweite Querträger 14 über das zweite Bahnelement 17 mit dem dritten Querträger 15 verbunden. Weiter ist der erste und der dritte Querträger 13, 15 derart mit dem Seilzug 9 gekoppelt, dass bei einer Drehung der Wickelrolle 10 eine Bewegung des ersten und des zweiten Querträgers 13, 15 in Längserstreckung L der Längsführungselemente 1, 2 erfolgt. Vorteilhafterweise sind der erste Querträger 13 und der dritte Querträger 15 derart mit dem Seilzug 9 verbunden, dass sie gleichzeitig bewegt werden, insbesondere, dass sei sich entgegengesetzt bewegen. Die in Figur 2 gezeigte Überdachungsvorrichtung umfasst z.B. genau einen Überdachungs-Abschnitt 18.

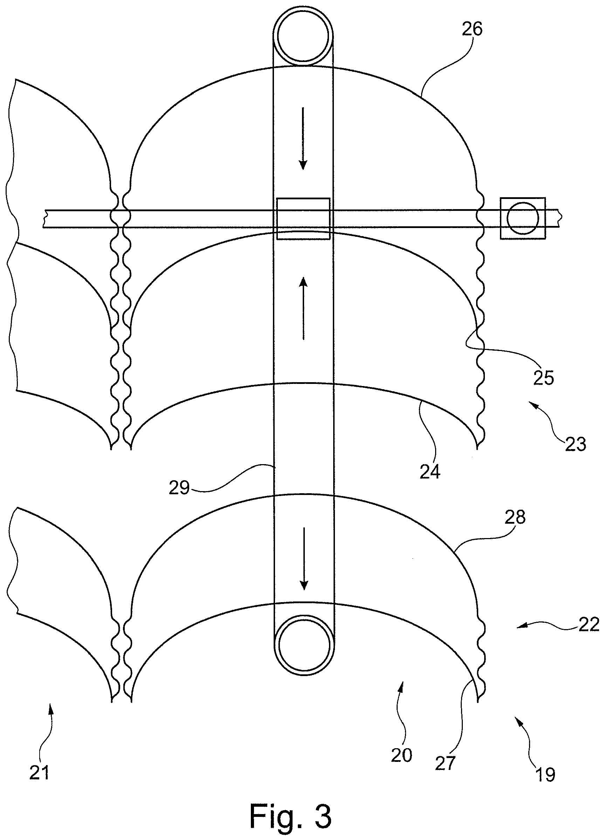

Figur 3 zeigt ein Überdachungssystem 19 bestehend aus einer ersten Überdachungsvorrichtung 20 und einer zweiten Überdachungsvorrichtung 21. Die zweite Überdachungsvorrichtung 21 ist nur teilweise dargestellt. Die erste Überdachungsvorrichtung 20 umfasst z.B. zwei Überdachungs-Abschnitte 22, 23, wobei der erste Überdachungs-Abschnitt 22 drei Querträger 24 - 26 aufweist und der zweite Überdachungs-Abschnitt 23 zwei Querträger 27, 28. Die Querträger 24, 26, 28 sind beweglich ausgebildet und die Querträger 25, 27 sind unbeweglich vorhanden. Die beweglichen Querträger 24, 28 sind zum Öffnen oder Schließen einer Überdachung der Überdachungsvorrichtung 20 aufeinander zu oder voneinander weg bewegbar. Im geschlossenen Zustand der Überdachung der Überdachungsvorrichtung 20 sind die Querträger 24, 28 maximal aufeinander zu bewegt und berühren sich beispielsweise. In Figur 3 ist ein halb geöffneter oder halb geschlossener Zustand der Überdachung im Bereich der Querträger 24, 28 dargestellt. Vorteilhafterweise werden die beweglichen Querträger 24, 26, 28 durch einen einzigen Seilzug 29 insbesondere gleichzeitig bewegt. Außerdem in Figur 3 gezeigt ist, dass die Querträger 24 - 28 im montierten Zustand gebogen vorhanden sind. Die zweite Überdachungsvorrichtung 21 des Überdachungssystems 19 ist vorteilhafterweise identisch zur ersten Überdachungsvorrichtung 20 ausgebildet. Beispielsweise sind die beiden Überdachungsvorrichtungen 20, 21 benachbart und parallel verlaufend vorhanden.

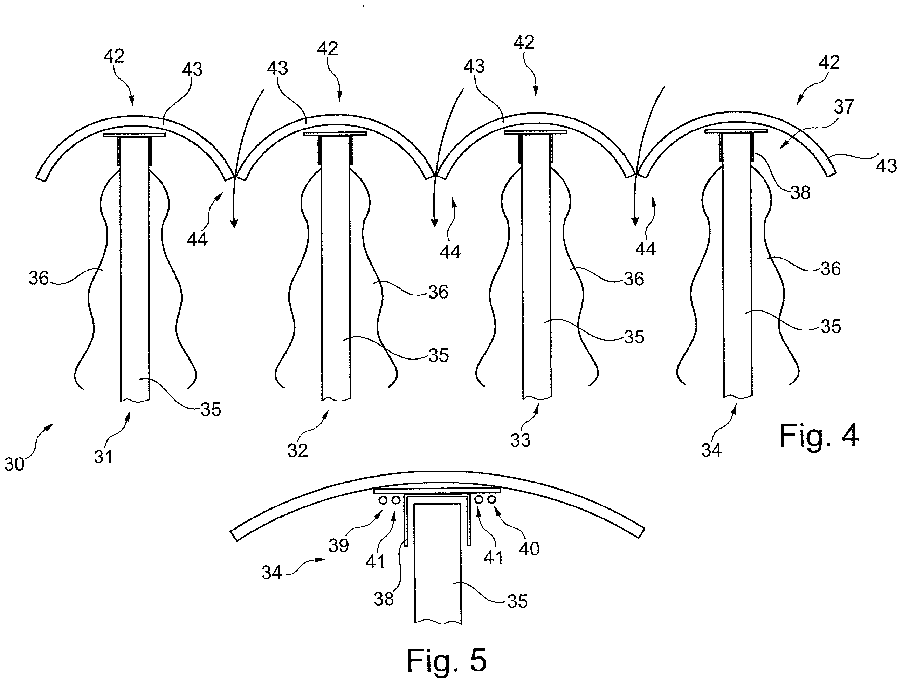

In Figur 4 ist ein weiteres Überdachungssystem 30 bestehend aus vier Überdachungsvorrichtungen 31 - 34 in einer seitlichen Ansicht, in Längserstreckung der Längserstreckungselemente bzw. der Überdachungsvorrichtungen 31 - 34 dargestellt. Die Überdachungsvorrichtungen 31 - 34 können verschieden oder identisch zueinander ausgebildet sein. Aufgrund der Verständlichkeit erhalten alle gleichen Komponenten der vier Überdachungsvorrichtungen 31 - 34 in Figur 4 die gleichen Bezugszeichen. Gezeigt sind Befestigungselemente 35, welche zu überdachende Pflanzen 36 überragen. An einem oberen Ende 37 der Befestigungselemente 35 ist ein Kopplungsorgan 38 ausgebildet, an welchem Längsführungselement 39, 40 und/oder ein Seilzug 41 der Überdachungsvorrichtungen 31 - 34 angeordnet, z.B. geführt und/oder befestigt ist (siehe Figur 5). Das obere Ende 37 des Befestigungselements 35 bildet gleichzeitig vorteilhafterweise eine Firstbereich 42 der Überdachungsvorrichtungen 31 - 34. Die Querträger 43 der Überdachungsvorrichtungen 31 - 34 fallen zu ihren Enden hin vom Firstbereich 42 nach unten ab und bilden an ihren Enden einen Traufenbereich 44. Am Traufenbereich 44 ist eine Dachfläche des Überdachungssystems 30 vorteilhafterweise in jedem Positionszustand der beweglichen Querträger der Überdachungsvorrichtungen 31 - 34 geöffnet vorhanden, sodass Wasser oder Hagel am Traufenbereich 44 die Dachfläche des Überdachungssystems 30 verlassen und die Dachfläche damit entlasten kann.

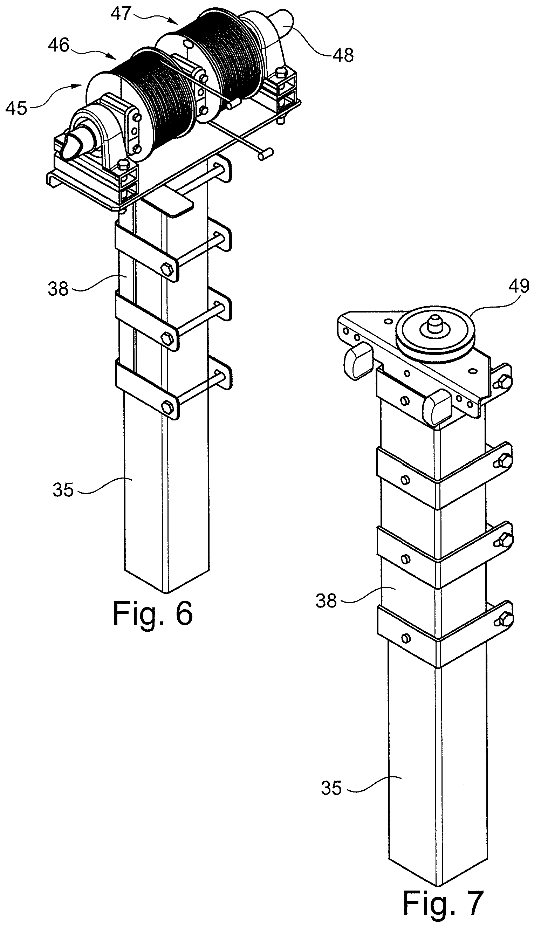

In Figur 6 ist eine Variante einer Wickelrolle 45 gezeigt. Die Wickelrolle 45 ist mittels des Kopplungsorgans 38 am Befestigungselement 35 angeordnet. Die Wickelrolle 45 umfasst zwei Wickeltrommeln 46, 47 auf welche der Seilzug 29 jeweils gegenläufig aufgewickelt ist. Die Wickeltrommeln 46, 47 sind z.B. auf einer Antriebswelle 48 der Wickelwelle 45 rotationsfest angeordnet, sodass der Seilzug 29 bei einer Drehung der Antriebswelle 48 von der einen Wickeltrommel 46 abgewickelt und gleichzeitig auf die weitere Wickeltrommel 47 aufgewickelt wird oder umgekehrt. Hierdurch ist die Wickelrolle 45 an einem Ende einer Überdachungsvorrichtung anordenbar, wobei am gegenüberliegenden Ende der Überdachungsvorrichtung z.B. eine Umlenkrolle 49 vorhanden ist (siehe Figur 7), um welche der Seilzug 29 verläuft. Denkbar ist aber auch, dass am gegenüberliegenden Ende eine insbesondere identische Wickelrolle vorhanden ist. Vorstellbar ist auch, dass die Wickelrolle 45 eine einzige Wickeltrommel aufweist (nicht dargestellt).

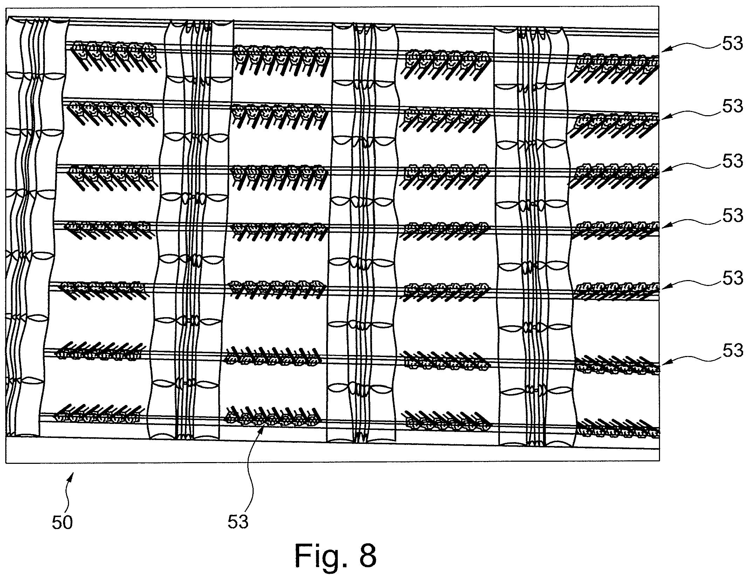

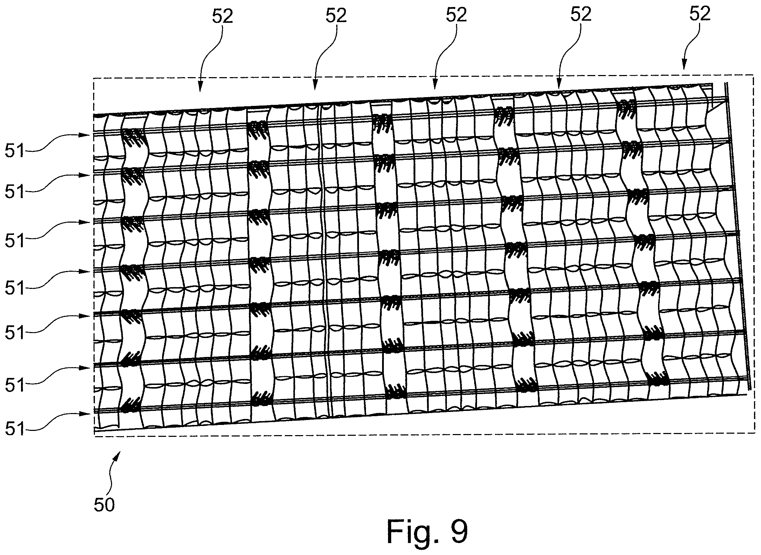

Die Figuren 8 und 9 zeigen ein weiteres Überdachungssystem 50. Das weitere Überdachungssystem 50 umfasst beispielsweise sieben Überdachungsvorrichtungen 51, wobei jede Überdachungsvorrichtung 51 mehrere Überdachungs-Abschnitte 52 aufweist, welche mittels Seilzügen 53 beweglich vorhanden sind. Anhand der Figuren 8 und 9 lässt sich ein Bewegungsablauf der Überdachungs-Abschnitte 52 bei einem Schließ- oder Öffnungsvorgang des Überdachungssystems 50 nachvollziehen.

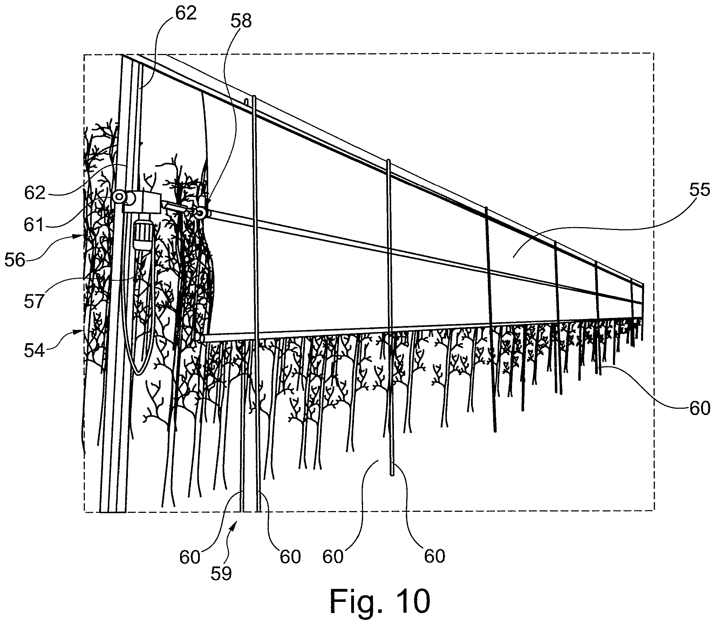

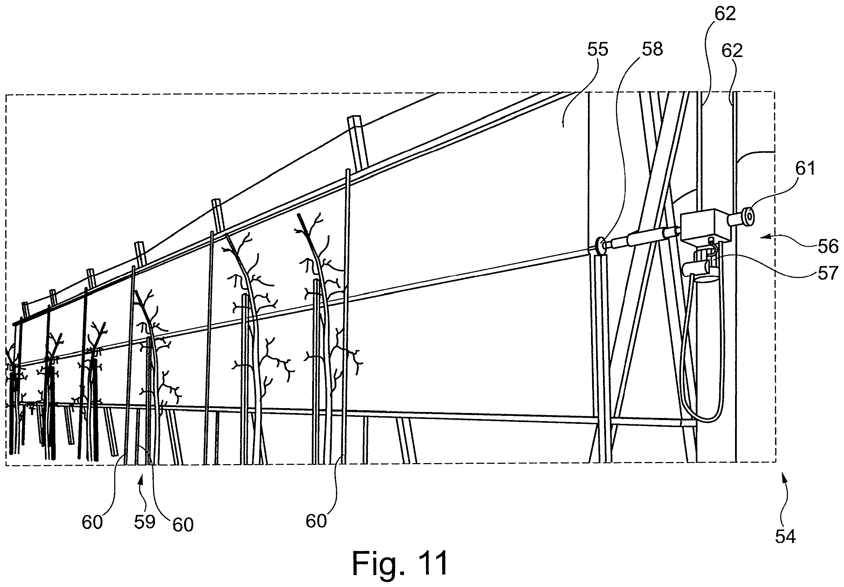

In den Figuren 10 und 11 ist eine Antriebssystem 54 für ein Abdeckelement 55 gezeigt. Das Antriebssystem 54 umfasst eine Wickelvorrichtung 56 mit einer Antriebseinheit 57 und einem Wickelelement 58. Weiter umfasst das Antriebssystem 54 eine Führungseinheit 59, welche aus Führungsstangen 60 gebildet ist, zwischen welchen das Abdeckelement 55 beweglich geführt angeordnet ist. Das Antriebssystem 54 umfasst außerdem einen Wickelkörper in Form einer Wickeltrommel 61, an welcher ein Stahlseil 62 auf und abwickelbar angeordnet ist, sodass die Antriebseinheit 57 mit dem Wickelelement 58 auf- und abbewegbar vorhanden ist.

**Bezugszeichenliste**

| | | | |
|---|---|---|---|
| 1, 2 | Längsführungs- | 37 | Ende |
| | element | 38 | Kopplungsorgan |
| 3, 4 | Pfosten | 39, 40 | Längsführungs-element |
| 5 | Aufständerung | | |
| 6 | Überdachungs- | 41 | Seilzug |
| | vorrichtung | 42 | Firstbereich |
| 7, 8 | Umlenkrolle | 43 | Querträger |
| 9 | Seilzug | 44 | Traufenbereich |
| 10 | Wickelrolle | 45 | Wickelwelle |
| 11 | Antriebswelle | 46, 47 | Wickeltrommel |
| 12 | Motor | 48 | Antriebswelle |
| 13 - 15 | Querträger | 49 | Umlenkrolle |
| 16, 17 | Bahnelement | 50 | Überdachungssystem |
| 18 | Überdachungs- | 51 | Überdachungs-vorrichtung |
| | Abschnitt | | |
| 19 | Überdachungssystem | 52 | Überdachungs-Abschnitt |
| 20, 21 | Überdachungs- | | |
| | vorrichtung | 53 | Seilzug |
| 22, 23 | Überdachungs- | 54 | Antriebssystem |
| | Abschnitt | 55 | Abdeckelement |
| 24 - 28 | Querträger | 56 | Wickelvorrichtung |
| 29 | Seilzug | 57 | Antriebseinheit |
| 30 | Überdachungssystem | 58 | Wickelelement |
| 31 - 34 | Überdachungs- | 59 | Führungseinheit |
| | vorrichtung | 60 | Führungsstange |
| 35 | Befestigungselement | 61 | Wickeltrommel |
| 36 | Pflanze | 62 | Stahlseil |

## Patentansprüche

1. Überdachungsvorrichtung (6, 20, 21, 31-34, 51), insbesondere Faltdachvorrichtung, wobei die Überdachungsvorrichtung (6, 20, 21, 31-34, 51) eine Längsführungseinrichtung, zumindest zwei Querträger (13-15, 24-28, 43) und ein flexibles Bahnelement (16) umfasst, wobei die Längsführungseinrichtung ein Längsführungselement (1, 2), Bewegungsmittel, ein Antriebselement (12) und eine Aufständerung aufweist, wobei das Längsführungselement (1, 2) sich zwischen Befestigungselementen (35) der Aufständerung erstreckt, wobei ein erster Querträger (13, 15, 24, 26, 28, 43) mit den Bewegungsmittel gekoppelt ist, sodass der erste Querträger (13, 15, 24, 26, 28, 43) durch das Antriebselement (12) bewegbar vorhanden ist, wobei der erste Querträger (13, 15, 24, 26, 28, 43) relativ zu einem zweiten Querträger (14, 25, 27, 43) bewegbar vorhanden ist, wobei der zweite Querträger (14, 25, 27, 43) an der Aufständerung und/oder am Längsführungselement (1, 2) fixiert ist, wobei eine Längserstreckung der Querträger (13-15, 24-28, 43) quer zu einer Erstreckungsrichtung des Längsführungselements (1, 2) vorhanden ist, wobei der erste Querträger (13-15, 24, 26, 28, 43) in einem mittleren Bereich einer Längserstreckung des Querträgers (13-15, 24, 26, 28, 43) durch das Längsführungselement (1, 2) geführt gehalten ist, wobei ein dritter Querträger (13, 15, 24, 26, 28, 43) vorhanden sind, wobei der erste und der dritte Querträger (13, 15, 24, 26, 28, 43) relativ zum zweiten Querträger (14, 25, 27, 43) bewegbar sind, wobei der erste Querträger (13) gegenläufig zum dritten Querträger (15) bewegbar ist, **dadurch gekennzeichnet, dass** der erste (13, 15, 24, 26, 28, 43) und der zweite (14, 25, 27, 43) Querträger über das Bahnelement (16) miteinander verbunden sind, wobei der zweite Querträger (14, 25, 27, 43) quer zu einer Längserstreckung der Querträger (13-15, 24-28, 43) gesehen zwischen dem ersten und dem dritten Querträger (13, 15, 24, 26, 28, 43) vorhanden ist, wobei der zweite (14, 25, 27, 43) und der dritte Querträger (13, 15, 24, 26, 28, 43) über ein weiteres Bahnelement (17) miteinander verbunden sind.

2. Überdachungsvorrichtung (6, 20, 21, 31-34, 51), nach Anspruch 1, **dadurch gekennzeichnet, dass** zwei Längsführungselemente (1, 2) parallel verlaufend und beabstandet zueinander vorhanden sind.

3. Überdachungsvorrichtung (6, 20, 21, 31-34, 51), nach einem der vorangegangenen Ansprüche, **dadurch gekennzeichnet, dass** das Antriebselement (12) als ein Getriebemotor und/oder als ein Wickelmotor ausgebildet ist.

4. Überdachungsvorrichtung (6, 20, 21, 31-34, 51), nach einem der vorangegangenen Ansprüche, **dadurch gekennzeichnet, dass** die Bewegungsmittel ein Seilzugsystem (7 - 10) aufweisen.

5. Überdachungsvorrichtung (6, 20, 21, 31-34, 51), nach einem der vorangegangenen Ansprüche, **dadurch gekennzeichnet, dass** wenigstens eines der Bahnelemente (16, 17) als Folie ausgebildet ist.

6. Überdachungsvorrichtung (6, 20, 21, 31-34, 51), nach einem der vorangegangenen Ansprüche, **dadurch gekennzeichnet, dass** wenigstens einer der Querträger (13-15, 24-28, 43) als Profil ausgebildet ist.

7. Überdachungsvorrichtung (6, 20, 21, 31-34, 51), nach einem der vorangegangenen Ansprüche, **dadurch gekennzeichnet, dass** das Bahnelement (16) entlang einer Längsachse des Querträgers (13-15, 24-28,43) mit dem Querträger verbunden ist.

8. Überdachungsvorrichtung (6, 20, 21, 31-34, 51), nach einem der vorangegangenen Ansprüche, **dadurch gekennzeichnet, dass** das Befestigungselement (35) der Aufständerung als ein Pfosten oder als ein Pfahl ausgebildet ist, wobei die Aufständerung Kopplungsmittel (38) aufweist, um einen Querträger, das Längsführungselement, die Bewegungsmittel und/oder das Antriebselement anzuordnen.

9. Überdachungsvorrichtung (31-34), nach einem der vorangegangenen Ansprüche, **dadurch gekennzeichnet, dass** wenigstens einer der Querträger (43) dachsparrenartig vorhanden ist, wobei der Querträger (43) sich über einen Dachfirst der Überdachungsvorrichtung (31 - 34) insbesondere durchgängig verlaufend erstreckt.

10. Überdachungsvorrichtung (31-34), nach Anspruch 9, **dadurch gekennzeichnet, dass** wenigstens einer der Querträger (43) im Firstbereich (42) des Dachfirsts der Überdachungsvorrichtung (31 - 34) durch das Längsführungselement (39, 40) geführt gehalten ist.

11. Überdachungssystem (19, 30) bestehend aus einem, zwei oder mehr Überdachungsvorrichtungen (20, 21) nach einem der vorangegangenen Ansprüche.

12. Überdachungssystem (30) nach Anspruch 11, **dadurch gekennzeichnet, dass** Querträger (43) unterschiedlicher Überdachungsvorrichtungen (31 - 34) nach einem der vorangegangenen Ansprüche, welche benachbart zueinander vorhanden sind, miteinander verbunden sind.

13. Überdachungssystem (30) nach Anspruch 11 und Anspruch 12, **dadurch gekennzeichnet, dass** eine ersten und eine zweite Überdachungsvorrichtung (31 - 34) derart miteinander gekoppelt vorhanden sind und nur die erste Überdachungsvorrichtung (31) ein Antriebselement und/oder Bewegungsmittel aufweist, dass ein Querträger (43) der zweiten Überdachungsvorrichtung (32) durch das Antriebselement der ersten Überdachungsvorrichtung (31) bewegbar ist.

14. Überdachungssystem (30) nach Anspruch 11 bis 13, **dadurch gekennzeichnet, dass** eine Überdachungsvorrichtung ein bewegliches Abdeckelement aufweist, sodass eine seitliche Öffnung der Überdachungsvorrichtung durch das Abdeckelement abdeckbar vorhanden ist.

15. Überdachungssystem (19, 30) nach Anspruch 14, **dadurch gekennzeichnet, dass** ein Antriebssystem vorhanden ist, um das Abdeckelement zu bewegen.

16. Überdachungssystem (19, 30) nach Anspruch 15, **dadurch gekennzeichnet, dass** das Antriebssystem als eine Wickelvorrichtung ausgebildet ist, wobei die Wickelvorrichtung ein mit einer Antriebseinheit drehbares und am Abdeckelement angreifendes längliches Wickelelement umfasst, mit dem abhängig von der Drehrichtung des Wickelelements das Abdeckelement auf das Wickelelement aufwickelbar und von diesem wieder abwickelbar ist, wobei Übertragungsmittel für ein Zusammenwirken der Antriebseinheit und des Wickelelements vorgesehen sind, mit einem wickelbaren Zugelement, das an einem drehbaren Wickelkörper aufgenommen ist, wobei der Wickelkörper mit der Antriebseinheit drehverbunden ist, wobei das Zugelement mit dem Wickelkörper auf- und abwickelbar ist.

## Claims

1. Roofing apparatus (6, 20, 21, 31-34, 51), in particular folding-roof apparatus, wherein the roofing apparatus (6, 20, 21, 31-34, 51) comprises a longitudinal guide device, at least two transverse members (13-15, 24-28, 43) and a flexible web element (16), wherein the longitudinal guide device has a longitudinal guide element (1, 2), movement means, a drive element (12) and a mounting frame, wherein the longitudinal guide element (1, 2) extends between fastening elements (35) of the mounting frame, wherein a first transverse member (13, 15, 24, 26, 28, 43) is coupled to the movement means, with the result that the first transverse member (13, 15, 24, 26, 28, 43) can be moved by the drive element (12), wherein the first transverse member (13, 15, 24, 26, 28, 43) can be moved relative to a second transverse member (14, 25, 27, 43), wherein the second transverse member (14, 25, 27, 43) is fixed to the mounting frame and/or to the longitudinal guide element (1, 2), wherein a longitudinal extent of the transverse members (13-15, 24-28, 43) is transverse to an extent direction of the longitudinal guide element (1, 2), wherein the first transverse member (13-15, 24, 26, 28, 43) is held in a central region of a longitudinal extent of the transverse member (13-15, 24, 26, 28, 43) in a guided manner by the longitudinal guide element (1, 2), wherein a third transverse member (13, 15, 24, 26, 28, 43) is present, wherein the first and the third transverse member (13, 15, 24, 26, 28, 43) can be moved relative to the second transverse member (14, 25, 27, 43), wherein the first transverse member (13) can be moved in an opposite direction to the third transverse member (15), **characterized in that** the first transverse member (13, 15, 24, 26, 28, 43) and the second transverse member (14, 25, 27, 43) are connected to one another by way of the web element (16), wherein the second transverse member (14, 25, 27, 43) is present between the first and the third transverse member (13, 15, 24, 26, 28, 43) as seen transversely with respect to a longitudinal extent of the transverse members (13-15, 24-28, 43), wherein the second transverse member (14, 25, 27, 43) and the third transverse member (13, 15, 24, 26, 28, 43) are connected to one another by way of a further web element (17).

2. Roofing apparatus (6, 20, 21, 31-34, 51) according to Claim 1, **characterized in that** two longitudinal guide elements (1, 2) run parallel to one another and are spaced apart from one another.

3. Roofing apparatus (6, 20, 21, 31-34, 51) according to either of the preceding claims, **characterized in that** the drive element (12) is in the form of a geared motor and/or in the form of a winding motor.

4. Roofing apparatus (6, 20, 21, 31-34, 51) according to one of the preceding claims, **characterized in that** the movement means comprise a cable pull system (7-10).

5. Roofing apparatus (6, 20, 21, 31-34, 51) according to one of the preceding claims, **characterized in that** at least one of the web elements (16, 17) is in the form of a film.

6. Roofing apparatus (6, 20, 21, 31-34, 51) according to one of the preceding claims, **characterized in that** at least one of the transverse members (13-15, 24-28, 43) is in the form of a profile.

7. Roofing apparatus (6, 20, 21, 31-34, 51) according to one of the preceding claims, **characterized in that** the web element (16) is connected to the transverse member along a longitudinal axis of the transverse member (13-15, 24-28, 43).

8. Roofing apparatus (6, 20, 21, 31-34, 51) according to one of the preceding claims, **characterized in that** the fastening element (35) of the mounting frame is in the form of a post or in the form of a pole, wherein the mounting frame has coupling means (38) for arrangement of a transverse member, the longitudinal guide element, the movement means and/or the drive element.

9. Roofing apparatus (31-34) according to one of the preceding claims, **characterized in that** at least one of the transverse members (43) is of rafter-like form, wherein the transverse member (43) extends over a first roof ridge of the roofing apparatus (31-34), in particular in a continuously running manner.

10. Roofing apparatus (31-34) according to Claim 9, **characterized in that** at least one of the transverse members (43) is held in the ridge region (42) of the roof ridge of the roofing apparatus (31-34) in a guided manner by the longitudinal guide element (39, 40) .

11. Roofing system (19, 30) consisting of one, two or more roofing apparatuses (20, 21) according to one of the preceding claims.

12. Roofing system (30) according to Claim 11, **characterized in that** transverse members (43) of various roofing apparatuses (31-34) according to one of the preceding claims, said apparatuses being adjacent to one another, are connected to one another.

13. Roofing system (30) according to Claim 11 and Claim 12, **characterized in that** a first and a second roofing apparatus (31-34) are coupled to one another, and only the first roofing apparatus (31) has a drive element and/or movement means, in such a way that a transverse member (43) of the second roofing apparatus (32) can be moved by the drive element of the first roofing apparatus (31).

14. Roofing system (30) according to Claims 11 to 13, **characterized in that** the roofing apparatus has a movable cover element, such that a lateral opening of the roofing apparatus can be covered by the cover element.

15. Roofing system (19, 30) according to Claim 14, **characterized in that** a drive system is present in order to move the cover element.

16. Roofing system (19, 30) according to Claim 15, **characterized in that** the drive system is in the form of a winding apparatus, wherein the winding apparatus comprises an elongate winding element which can be rotated with a drive unit, which engages with the cover element and by means of which the cover element can be wound onto the winding element and unwound from it again depending on the direction of rotation of the winding element, wherein transmission means for cooperation between the drive unit and the winding element are provided, comprising a windable tensile element which is received on a rotatable winding body, wherein the winding body is rotationally connected to the drive unit, wherein the tensile element can be wound up and unwound with the winding body.

## Revendications

1. Dispositif de couverture (6, 20, 21, 31-34, 51), notamment dispositif de toit pliant, le dispositif de couverture (6, 5, 20, 21, 31-34, 51) comprenant un appareil de guidage longitudinal, au moins deux supports transversaux (13-15, 24-28, 43) et un élément de bande flexible (16), l'appareil de guidage longitudinal présentant un élément de guidage longitudinal (1, 2), des moyens de déplacement, un élément d'entraînement (12) et une structure élevée, l'élément de guidage longitudinal (1, 2) s'étendant entre des éléments de fixation (35) de la structure élevée, un premier support transversal (13, 15, 24, 26, 28, 43) étant couplé aux moyens de déplacement, de telle sorte que le premier support transversal (13, 15, 24, 26, 28, 43) se présente sous forme déplaçable par l'élément d'entraînement (12), le premier support transversal (13, 15, 24, 26, 28, 43) se présentant sous forme déplaçable par rapport à un deuxième support transversal (14, 25, 27, 43), le deuxième support transversal (14, 25, 27, 43) étant fixé à la structure élevée et/ou à l'élément de guidage longitudinal (1, 2), une extension longitudinale des supports transversaux (13-15, 24-28, 43) se présentant sous forme transversale à une direction d'extension de l'élément de guidage longitudinal (1, 2), le premier support transversal (13-15, 24, 26, 28, 43) étant maintenu dans une zone centrale d'une extension longitudinale du support transversal (13-15, 24, 25, 26, 28, 43) de manière guidée par l'élément de guidage longitudinal (1, 2), un troisième support transversal (13, 15, 24, 26, 28, 43) étant présent, le premier et le troisième support transversal (13, 15, 24, 26, 28, 43) étant déplaçables par rapport au deuxième support transversal (14, 25, 27, 43), le premier support transversal (13) étant déplaçable en sens inverse du troisième support transversal (15), **caractérisé en ce que** le premier (13, 15, 24, 26, 28, 43) et le deuxième (14, 25, 27, 43) support transversal sont reliés entre eux par l'intermédiaire de l'élément de bande (16), le deuxième support transversal (14, 25, 27, 43) étant présent entre le premier et le troisième support transversal (13, 15, 24, 26, 28, 43), tel que vu transversalement à une extension longitudinale des supports transversaux (13-15, 24-28, 43), le deuxième (14, 25, 27, 43) et le troisième support transversal (13, 15, 24, 26, 28, 43) étant reliés entre eux par l'intermédiaire d'un autre élément de bande (17).

2. Dispositif de couverture (6, 20, 21, 31-34, 51) selon la revendication 1, **caractérisé en ce que** deux éléments de guidage longitudinaux (1, 2) se présentent en s'étendant parallèlement et espacés l'un de l'autre.

3. Dispositif de couverture (6, 20, 21, 31-34, 51) selon l'une quelconque des revendications précédentes, **caractérisé en ce que** l'élément d'entraînement (12) est configuré sous la forme d'un motoréducteur et/ou sous la forme d'un moteur d'enroulement.

4. Dispositif de couverture (6, 20, 21, 31-34, 51) selon l'une quelconque des revendications précédentes, **caractérisé en ce que** les moyens de déplacement présentent un système de câble de traction (7-10).

5. Dispositif de couverture (6, 20, 21, 31-34, 51) selon l'une quelconque des revendications précédentes, **caractérisé en ce qu'**au moins un des éléments de bande (16, 17) est configuré sous forme de feuille.

6. Dispositif de couverture (6, 20, 21, 31-34, 51) selon l'une quelconque des revendications précédentes, **caractérisé en ce qu'**au moins un des supports transversaux (13-15, 24-28, 43) est configuré sous forme de profilé.

7. Dispositif de couverture (6, 20, 21, 31-34, 51) selon l'une quelconque des revendications précédentes, **caractérisé en ce que** l'élément de bande (16) est relié au support transversal le long d'un axe longitudinal du support transversal (13-15, 24-28, 43).

8. Dispositif de couverture (6, 20, 21, 31-34, 51) selon l'une quelconque des revendications précédentes, **caractérisé en ce que** l'élément de fixation (35) de la structure élevée est configuré sous la forme d'un poteau ou sous la forme d'un pieu, la structure élevée présentant des moyens d'accouplement (38) pour agencer un support transversal, l'élément de guidage longitudinal, les moyens de déplacement et/ou l'élément d'entraînement.

9. Dispositif de couverture (31-34) selon l'une quelconque des revendications précédentes, **caractérisé en ce qu'**au moins un des supports transversaux (43) se présente sous forme de chevron, le support transversal (43) s'étendant sur un faîte du dispositif de couverture (31-34), notamment de manière continue.

10. Dispositif de couverture (31-34) selon la revendication 9, **caractérisé en ce qu'**au moins un des supports transversaux (43) est maintenu dans la zone de faîte (42) du faîte du dispositif de couverture (31-34) de manière guidée par l'élément de guidage longitudinal (39, 40).

11. Système de couverture (19, 30) constitué par un, deux dispositifs de couverture ou plus (20, 21) selon l'une quelconque des revendications précédentes.

12. Système de couverture (30) selon la revendication 11, **caractérisé en ce que** des supports transversaux (43) de dispositifs de couverture différents (31-34) selon l'une quelconque des revendications précédentes, qui se présentent en position voisine les uns des autres, sont reliés entre eux.

13. Système de couverture (30) selon la revendication 11 et la revendication 12, **caractérisé en ce qu'**un premier et un deuxième dispositif de couverture (31-34) se présentent sous forme couplée l'un à l'autre et seul le premier dispositif de couverture (31) présente un élément d'entraînement et/ou des moyens de déplacement, de telle sorte qu'un support transversal (43) du deuxième dispositif de couverture (32) peut être déplacé par l'élément d'entraînement du premier dispositif de couverture (31).

14. Système de couverture (30) selon les revendications 11 à 13, **caractérisé en ce qu'**un dispositif de couverture présente un élément de recouvrement mobile, de telle sorte qu'une ouverture latérale du dispositif de couverture se présente sous forme recouvrable par l'élément de recouvrement.

15. Système de couverture (19, 30) selon la revendication 14, **caractérisé en ce qu'**un système d'entraînement est présent pour déplacer l'élément de recouvrement.

16. Système de couverture (19, 30) selon la revendication 15, **caractérisé en ce que** le système d'entraînement est configuré sous la forme d'un dispositif d'enroulement, le dispositif d'enroulement comprenant un élément d'enroulement allongé pouvant tourner avec une unité d'entraînement et agissant sur l'élément de recouvrement, avec lequel, en fonction de la direction de rotation de l'élément d'enroulement, l'élément de recouvrement peut être enroulé sur l'élément d'enroulement et de nouveau déroulé de celui-ci, des moyens de transmission étant prévus pour une coopération de l'unité d'entraînement et de l'élément d'enroulement, avec un élément de traction enroulable, qui est reçu sur un corps d'enroulement rotatif, le corps d'enroulement étant relié en rotation à l'unité d'entraînement, l'élément de traction pouvant être enroulé et déroulé avec le corps d'enroulement.
